# EUROPÄISCHE PATENTSCHRIFT

(11) **EP 1 818 356 B1**
(45) Veröffentlichungstag und Bekanntmachung des Hinweises auf die Patenterteilung: **21.05.2008**
(21) Anmeldenummer: 07002271.0
(22) Anmeldetag: 02.02.2007
(51) Int. Cl.: C08J 3/18, C08K 5/00

(54) **Verwendung von Triglyceriden als Weichmacher für Polyolefine**
Use of triglycerides as plasticizer for polyolefines
Utilisation des triglycérides en tant qu'agent plastifiant pour polyolefines

(30) Priorität: 11.02.2006 DE 102006006396
(43) Veröffentlichungstag der Anmeldung: 15.08.2007
(73) Patentinhaber: Cognis IP Management GmbH, 40589 Düsseldorf (DE)
(72) Erfinder: Wild, Christine, 40724 Hilden (DE); Stein, Rolf, 40764 Langenfeld (DE); Kraemer, Hans-Georg, 41539 Dormagen (DE)

(56) Entgegenhaltungen:
- WO-A-03/068856
- DE-C1- 10 114 651
- GB-A- 942 619

## Beschreibung

### Gebiet der Erfindung

Die Erfindung betrifft die Verwendung von Triglyceriden als Weichmacher für Polyolefine.

### Stand der Technik

WO 03/068856 beschreibt die Verwendung von Verbindungen der allgemeinen Formeln A-B-C-B-A (I) bzw. A-B-A (II), zur weichmachenden Ausrüstung von polyolefin-haltigen Gegenständen. In diesen Formeln bedeutet A jeweils einen Rest R-COO, wobei R für einen gesättigten, verzweigten oder unverzweigten Alkylrest mit 7 bis 21 C-Atomen steht, B jeweils eine Gruppe (CₙH₂ₙO)ₖ bedeutet, wobei n für ganze Zahlen von 2 bis 4 steht und k die Werte von 1 bis 15 aufweisen kann und C in der Formel (I) für einen linearen oder verzweigten Alkylenrest mit mindestens 2 und höchstens 6 C-Atomen steht. Der Index k bezieht sich hierbei auf die einzelne Gruppe B und gibt nicht die Gesamtzahl der Gruppe B im Molekül an. Der Index k variiert aufgrund der unterschiedlichen, technisch bedingten Alkoxylierungsgrade der Einzelmoleküle und kann daher auch ungeradzahlig sein.
Im Hinblick auf die vorliegende Erfindung sei ausdrücklich festgestellt, dass die gemäß WO 03/068856 einzusetzenden Additive (I) bzw. (II) den Polyolefinen hydrophile und nicht hydrophobe Eigenschaften verleihen und sich im übrigen strukturell erheblich von den gemäß der vorliegenden Erfindung einzusetzenden Triglyceriden unterscheiden.

Es ist bekannt, dass Mono- und Diglyceride als Additive für Polyolefine eingesetzt werden und zwar als Antistatika und als Gleitmittel. Dies sind jedoch Verwendungen, die mit der Verwendung als Weichmacher im Sinne der vorliegenden Erfindung nichts zu tun haben. Als Weichmacher werden auf dem Gebiet der Polyolefine üblicherweise die so genannten Weißöle eingesetzt, bei denen es sich um Paraffine handelt.
Beispielsweise beschreibt US-B-6,201,053**,** dass teilweise verseifte Triglyceride als Schmiermittel, Antistatika, Stabilisatoren, Coupling Agents oder Waterproofing Agents eingesetzt werden können.
Über die Verwendung von Triglyceriden als Weichmacher für Polyolefine ist jedoch nichts offenbart.

JP 62010141A2 (zitiert nach Chem. Abstracts 1987:215172 CAPLUS) beschreibt wasserdurchlässige Plastikfilme mit guter mechanischer Festigkeit und guter Wasserdurchlässigkeit, wobei diese Materialien erhalten werden durch Schmelzen und Formgebung von 100 Teilen Polyolefin, 20-500 Teilen Füllstoffen und 100 Teilen Triglyceriden. Zum Beispiel werden 100 Teile Ultzex 3021F (ein lineares low-density Polyethylen), 150 Teile Calciumcarbonat, 5 Teile Stearinsäure und 30 Teile hydriertes Kokosöl eingesetzt.
Über die Eignung von Triglyceriden als Weichmacher für Polyolefine ist nichts offenbart.

US-A-4,578,414 beschreibt benetzbare Fasern und Filamente, insbesondere auf Basis von Polyolefinen, die Netzmittel enthalten. Unter anderem können Mono, Di- oder Triglyceride als Netzmittel eingesetzt werden.
Über die Verwendung von Triglyceriden als Weichmacher für Polyolefine ist jedoch nichts offenbart.

### Beschreibung der Erfindung

Aufgabe der vorliegenden Erfindung war es Additive bereitzustellen, die sich als Weichmacher für Polyolefine eignen, insbesondere für solche Polyolefine, die in Form von Fasern, Filamenten und textilen Flächengebilden, die für Hygieneartikel, medizinische Artikel, Heimtextilien, Bekleidung und dergleichen eingesetzt werden.

Eine weitere Aufgabe der Erfindung war es, dass die Additive zwar den Polyolefinen Weichheit verleihen sollten, jedoch ohne andere Eigenschaften der Polyolefine nachteilig zu beeinflussen. Insbesondere sollten keine signifikanten Einbußen hinsichtlich Verarbeitbarkeit, thermische Stabilität und Vergilbungsneigung der Polyolefine auftreten, ebensowenig sollten die textiltechnischen Eigenschaften der Polyolefine beeinträchtigt werden.

Eine engere Aufgabenstellung bezieht sich auf Polyolefin-Vliesstoffe, die im Hygienebereich eingesetzt werden: Polyolefine werden zur Herstellung von Vliesstoffen im Hygienebereich seit Jahrzehnten eingesetzt. Bis vor einigen Jahren wurden dabei kardierte, d.h. aus Stapelfasern hergestellte, Vliese eingesetzt. In den letzten Jahren wurden in zunehmendem Maße sogenannte Spinnvliese eingesetzt. Die Spinnvliese weisen eine signifikant schlechtere Weichheit im Vergleich zu kardierten Vliesen auf. Durch die geringere Weichheit entstehen bei Hautkontakt höhere Reibungen mit der Folge von Hautirritationen bis hin zu Windeldermatitis. Vor diesem Hintergrund stellte sich insbesondere die Aufgabe, Weichmacher für Polyolefin-basierte Spinnvliese bereitzustellen, wobei die Hydrophobie der Polyolefine, insbesondere für die sogenannten leg cuffs (worunter die elastischen Beinabschlüsse der Windeln zu verstehen ist), erhalten bleiben soll, um ein Auslaufen der Windel zu verhindern. Eine Polyolefinfaser ist im Sinne der vorliegenden Erfindung dann als hydrophob anzusehen, wenn im weiter unten definierten Sinktest Sinkzeiten von mindestens 24 Stunden erzielt werden.

Überraschenderweise wurde nun gefunden, dass Triglyceride die gestellte Aufgabe in jeder Hinsicht ausgezeichnet erfüllen.

Gegenstand der Erfindung ist die Verwendung von Triglyceriden als Weichmacher für Polyolefine. Ausdrücklich sei festgestellt, dass die Triglyceride im Rahmen der vorliegenden Erfindung als interne Additive für Polyolefine zum Einsatz kommen.

### Zu den Triglyceriden

Unter Triglyceriden werden - wie in der Fachwelt allgemein üblich - Verbindungen der Struktur (T)

CH₂(OR¹)-CH(OR²)-CH₂(OR³) (T)

verstanden, worin die Reste R¹, R² und R³ Acylreste mit jeweils 8 bis 24 C-Atomen sind. Es handelt sich mithin um Triester des Glycerins, dessen drei Hydroxylgruppen durch Fettsäuren verestert sind. Die Kettenlängen der Reste R¹, R² und R³ können gleich oder unterschiedlich sein, die Reste R¹, R² und R³ können - ebenfalls unabhängig voneinander - gesättigt oder ein- bzw. mehrfach olefinisch ungesättigt sein.

Im Rahmen der vorliegenden Erfindung werden die einzusetzenden Triglyceride in Polyolefine enthaltenden Materialien, vorzugsweise Fasern, Flächengebilden, wie Vliesstoffen und Folien zur Verbesserung der Weichheit eingesetzt. Sie erfüllen also die Funktion, Weichmacher zu sein. Die erfindungsgemäße Verwendung der Triglyceride der Formel (T) als interne Additive führt also zu Polyolefin-haltigen Produkten mit guter Weichheit.

Die Triglyceride werden zur Weichmachung der Polyolefine, insbesondere Polypropylen, in Menge von 0,1 bis 100 phr, vorzugsweise 0,1 bis 40 phr und insbesondere 0,1 bis 10 phr eingesetzt. Eine Menge im Bereich von 1 bis 5 phr ist ganz besonders bevorzugt. Der dem Fachmann geläufige Ausdruck phr ("parts per hundred resin") gibt an, wieviele Gewichtsteile einer Komponente (hier: Triglycerid) im Kunststoff (hier: Polyolefin) - bezogen auf 100 Gewichtsteile Kunststoff - vorhanden sind.

Die Art und Weise, wie die Triglyceride dem Polyolefin zugesetzt werden, ist an sich nicht beschränkt und es kommen alle dem Fachmann einschlägig bekannten Methoden in Betracht. So können die Triglyceride beispielsweise in Pastillen- oder Granulatform dem Polyolefin zugesetzt werden. Es ist jedoch auch möglich, die Triglyceride in Form eines sog Masterbatches zuzudosieren.

Hinsichtlich der Natur der Triglyceride bestehen an sich keinerlei Beschränkungen. Die Triglyceride können natürlichen oder synthetischen Ursprungs sein. Es können einzelne Species oder beliebige Gemische untereinander eingesetzt werden. In einer Ausführungsform werden Triglyceride technischer Qualität eingesetzt; dabei beträgt deren Triglyceridgehalt mindestens 60 Gew.-%, vorzugsweise mindestens 80 Gew.-% und insbesondere mindestens 90 Gew.-%.

Bevorzugte Kettenlängen der Acylreste R¹, R² und R³ der Triglyceride sind (jeweils) C₁₂ bis C₂₄ und insbesondere C₁₆ bis C₂₄.

### Zu den Polyolefinen

Wie bereits gesagt handelt es sich bei den Polyolefinen um solche, die insbesondere in Form von Fasern, Filamenten und textilen Flächengebilden, die für Hygieneartikel, medizinische Artikel, Heimtextilien, Bekleidung und dergleichen eingesetzt werden. Unter anderem sind dies Materialien, die im persönlichen Bereich wie Babywindeln, Inkontinenzprodukten, Slipeinlagen verwendet werden sowie medizinische Produkte zur Wundversorgung, Heimtextilien wie Teppiche oder Betteinlagen, Bekleidung für Sport, Unterwäsche. Dabei kann es sich um Vliesstoffe bzw gestrickte, gewebte oder getuftete Textilien handeln. Die Textilien können in 1-stufigen oder mehrstufigen Prozessen hergestellt werden.

Bezüglich des Polyolefine enthaltenden Materials eigenen sich an sich alle bekannten Polymer- und Copolymertypen auf Ethylen- beziehungsweise Propylen-Basis. Auch Abmischungen reiner Polyolefine mit Copolymeren sind grundsätzlich geeignet. Desgleichen können die Additive in Mischungen aus Polyolefinen mit anderen synthetischen, z.B Polyester, oder natürlichen Polymeren, z.B. Baumwolle, Viskose , Cellulose oder Hanf eingesetzt werden, um den Polyolefinfasern eine bessere Weichheit zu verleihen.

Für die erfindungsgemäße Lehre besonders geeignete Polymertypen sind in der nachfolgenden Zusammenstellung aufgezählt: Poly(ethylene) wie HDPE (high density polyethylene), LDPE (low density polyethylene), VLDPE (very low density polyethylene), LLDPE (linear low density polyethylene), MDPE (medium density polyethylene), UHMPE (ultra high molecular polyethylene), VPE (vernetztes Polyethylen), HPPE (high pressure polyethylene); Poly(propylene) wie isotaktisches Polypropylen; syndiotaktisches Polypropylen; Metallocen-katalysiert hergestelltes Polypropylen PP, schlagzäh-modifiziertes Polypropylen, Random-Copolymere auf Basis Ethylen und Propylen, Blockcopolymere auf Basis Ethylen und Propylen; EPM (Poly[ethylen-co-propylen]); EPDM (Poly[ethylen-co-propylen-co-konjugiertes Dien]).

Weitere geeignete Polymertypen sind: Poly(styrol); Poly(methylstyrol); Poly(oxymethylen); Metallocen-katalysierte alpha-Olefin- oder Cycloolefin-Copolymere wie Norbornen-Ethylen-Copolymere; Copolymere, die zu mindestens 60 % Ethylen und/oder Styrol enthalten und zu weniger als 40 % Monomere wie Vinylacetat, Acrylsäureester, Methacrylsäureester, Acrylsäure, Acrylnitril, Vinylchlorid. Beispiele solcher Polymeren sind: Poly(ethylen-co-ethylacrylat), Poly(ethylen-co-vinylacetat), Poly(ethylen-co-vinylchlorid), Poly(styrol-co-acrylnitril). Geeignet sind weiterhin Pfropfcopolymere sowie Polymerblends, das heißt, Mischungen von Polymeren, in denen unter anderem die vorgenannten Polymere enthalten sind, beispielsweise Polymerblends auf Basis von Polyethylen und Polypropylen. Die Additive im sinne der vorliegenden Erfindung eignen sich auch zur weichmachenden Ausrüstung von sogenannten Biko-Fasem (core-sheat Fasern), die aus PES/PE oder PP/PE hergestellt werden.

Im Rahmen der vorliegenden Erfindung sind Homo- und Copolymere auf Basis von Ethylen und Propylen besonders bevorzugt. In einer Ausführungsform der vorliegenden Erfindung setzt man dementsprechend als Polyolefin ausschließlich Polyethylen ein, in einer anderen Ausführungsform ausschließlich Polypropylen, in einer weiteren Ausführungsform Copolymere auf Basis von Ethylen und Propylen.

In einer ganz besonders bevorzugten Ausführungsform der Erfindung werden die Triglycerid-Additive in Polypropylenfasern verwendet.

### Verfahren

Ein weiterer Erfindungsgegenstand ist ein Verfahren zur weichmachenden Ausrüstung von Gegenständen, die ganz oder teilweise Polyolefine enthalten, wobei man eine Polymergranulat, das ganz oder teilweise Polyolefine enthält, mit Triglyceriden in Mengen von 0,1 bis 100 Gew.-% bezogen auf das Granulat, versetzt und anschließend in an sich bekannter Weise zu Fasern oder Folien verarbeitet, vorzugsweise durch Extrusion. In einer bevorzugten Ausführungsform setzt man dabei die Triglyceride in Mengen von 0,1 bis 10 Gew.-%, vorzugsweise 0,1 bis 40 Gew.-% und insbesondere 1 bis 5 Gew.-% - jeweils bezogen auf das Granulat - ein.

Bezüglich den Triglyceriden gilt ansonsten das oben Gesagte. Insbesondere gilt: Hinsichtlich der Natur der Triglyceride, die natürlichen oder synthetischen Ursprungs sein können, bestehen an sich keinerlei Beschränkungen. In einer Ausführungsform werden Triglyceride technischer Qualität eingesetzt, deren Triglyceridgehalt mindestens 60 Gew.-% beträgt. In einer weiteren Ausführungsform beträgt der Triglyceridgehalt der technischen Triglyceride mindestens 80 Gew.-% und insbesondere mindestens 90 Gew.-%.

Gewünschtenfalls können den Polyolefinen neben den erfindungsgemäß einzusetzenden Triglycerid-Weichmachern auch ein oder mehrere weitere Additive zugesetzt werden, insbesondere solche, die auf dem Gebiet der Vliesstoffe üblich sind, etwa antibakterielle Zusätze. In einer Ausführungsform gilt dabei, dass den Polyolefinen neben den erfindungsgemäß einzusetzenden Triglycerid-Weichmachern, z.B. auch den genannten Triglyceriden technischer Qualität, nicht zusätzlich Mono- und/oder Diglyceride als weitere Additive zugefügt werden.

Gewünschtenfalls kann auf die Oberfläche des Polyolefin-Werkstoffes zusätzlich eine sogenannte Präparation aufgetragen werden, um die verarbeitungstechnischen Eigenschaften des Werkstoffes zu verbessern, etwa in Form einer sogenannten neat-Präparation oder in Form einer wässrigen Lösung oder Emulsion.

### Beispiele

| **Eingesetzte Substanzen** | |
|---|---|
| **Cegesoft HF 52** | Handelsübliches Triglycerid (Fa. Cognis Deutschland GmbH & Co. KG) |
| **Polyolefin:** | Polypropylen (Fa. Borealis, Typ PP HF 435 J); nachfolgend auch als PP abgekürzt |

### Testmethoden

### Griff:

Für die Griffbeurteilung wurden die untersuchenden Filamente mittels einer üblichen Garnweife abgeweift und die dabei entstandenen Stränge wurden durch 3 verschiedene Testpersonen haptisch bezüglich Weichheit beurteilt. Die Skala sieht folgende Noten vor: Note 1 = sehr,sehr weich, Note 2 = sehr weich, Note 3 = weich, Note 4 = hart, Note 5 = sehr hart, Note 6 = äußerst hart.

### Sinktest:

Beim Sinktest wurde zu untersuchendes Fasermaterial in einer speziellen Vorrichtung auf seine hydrophoben Eigenschaften geprüft. Dazu wurde eine definierte Fasermenge in einen Drahtkorb gegeben. Dieser Drahtkorb wurde auf die Oberfläche eines Wasserbades gesetzt. Im Falle einer hydrophilen Faser saugt sich diese in kurzer Zeit voll und das mit dem Fasermaterial gefüllte Drahtkörbchen sinkt hinab. Im vorliegenden Fall wurden die Sinkzeiten über am Wasserbad befestigte Lichtschranken erfasst. Das Fasermaterial wurde durch Abziehen von der Spule mit einer Luftpistole gewonnen.

### Bestimmung der mechanischen Eigenschaften:

Um die Beeinflussung der mechanischen Fadeneigenschaften durch die Additivzugabe zu quantifizieren, wurden die im Spinnversuch erzeugten Filamente einem Reissversuch analog DIN 53834 unterworfen. Dieser Reissversuch wurde auf einem handelsüblichen Statimaten der Firma Stein-Textechno durchgeführt. Zur Auswertung wurde die so genannte mechanische Konstante eingeführt, die definiert ist als das Produkt aus der ermittelten Reissfestigkeit mit der Quadratwurzel der Reissdehnung des Fadens. Je höher dieser Wert liegt (je näher am additivfreien Faden) desto günstiger.

### Vergilbung:

Zur Beurteilung der Vergilbung wurden die zu untersuchenden Stränge über 24 Stunden in einem Trockenschrank Temperaturen von 110 °C ausgesetzt. Daran anschliessend wurde der Grad der Vergilbung im Vergleich zu einem Additiv-freien Strang mittels visueller Beurteilung bewertet.

### Ausführungsbeispiele

Auf einer Pilotspinnmaschine, bestehend aus einem Extruder vom Fabrikat Barmag, Typ 3E, einer Schmelzetransferleitung, einem Spinnkopf mit Rechteckpaketen und einer Querstromanblasung im Spinnteil und aus einem Schnellspuler vom Typ Barmag SSW 46 im Aufspulteil, wurden Polypropylenfilamente als teilverstrecktes Garn (POY) ersponnen. Es wurde mit einem Schmelzedurchsatz von 30 g/min gearbeitet, der auf 2 Fäden mit je 36 Einzelfilamenten verteilt wurde. Die Heizzonen 1/2/3 des Extruders waren auf eine Temperatur von 240°C eingestellt, die Beheizung der Schmelzeleitung und des Spinnkopfes auf 260°C. Die Abkühlung der Filamente erfolgte über Blasluft im Querstrom. Nach der Abkühlung wurden die Filamente nicht wie sonst üblich mit einer Spinnpräparation versehen, sondern um den Effekt des Additives nicht zu beeinflussen, wurde reines demineralisiertes Wasser aufgetragen. Die Aufspulung der Filamente erfolgte bei einer Geschwindigkeit der Treibwalze von 2100 m/min, es wurde mit 9,5% Nutwalzenvoreilung gearbeitet.

Das untersuchende Additiv wurde zunächst aufgeschmolzen, anschliessend mit dem Polypropylen-Granulat in verschiedenen Mengenverhältnissen vermischt und dann dem Extruder über die Einzugsbuchse zugeführt. Als Additiv (in den untenstehenden Tabellen Additiv 1 genant) wurde Cegesoft HF 52 in unterschiedlichen Mengen eingesetzt.

Einzelheiten bzgl. der Mengen und die Untersuchungsergebnisse sind den untenstehenden Tabellen zu entnehmen.

Die erhaltenen Filamente wurden wie oben unter "Testmethoden" beschrieben untersucht.

Es wurden folgende Resultate erzielt:

**Tabelle 1: Griff (Bestimmung der Weichheit): gemäß dem oben beschriebenen Test**

| | Person 1 | Person 2 | Person 3 | Mittelwert |
|---|---|---|---|---|
| Ohne Additiv | 4 | 4 | 2 | 3,3 |
| Additiv 1 (2%) | 2 | 3 | 1 | 2 |
| Additiv 1 (3%) | 1 | 1 | 1 | 1 |

**Tabelle 2: Sinktest (Bestimmung der hydrophoben Eigenschaften): gemäß dem oben beschriebenen Test**

| | Sinkzeit |
|---|---|
| Ohne Additiv | > 24h |
| Additiv 1 (2%) | > 24h |
| Additiv 1 (3%) | > 24h |

**Tabelle 3: Beeinflussung der mechanischen Eigenschaften: gemäß dem oben beschriebenen Test**

| | Bruchdehnung (%) | Festigkeit (cN/dtex) | Festigkeit x √ B.dehnung |
|---|---|---|---|
| Ohne Additiv | 240 | 2,70 | 41,8 |
| Additiv 1 (3%) | 275 | 2,20 | 36,5 |

### Vergilbung

Um das Vergilbungspotential zu ermitteln, wurde Additiv 1 auf PP-Stapelfasern aufgesprüht (mit einer Auflage von 0,5%) und wie oben beschrieben ein Vergilbungstest durchgeführt. Additiv 1 wurde bei der visuellen Beurteilung als weiss (= nicht vergilbend) beurteilt.

## Patentansprüche

1. Verwendung von Triglyceriden als Weichmacher fiir Polyolefine.

2. Verwendung nach Anspruch 1, wobei man Triglyceride natürlichen Ursprungs einsetzt.

3. Verwendung nach Anspruch 1 oder 2, wobei man Triglyceride technischer Qualität einsetzt, deren Triglyceridgehalt mindestens 60 Gew.-% beträgt.

4. Verwendung nach einem der Ansprüche 1 bis 3, wobei die Polyolefine in Form von Spinnvliesen vorliegen.

5. Verwendung nach einem der Ansprüche 1 bis 4, wobei man die Polyolefine auswählt aus der Gruppe der Polyethylene, Polypropylene und Ethylen-Propylen-Copolymere.

6. Verwendung nach einem der Ansprüche 1 bis 4, wobei es sich bei den Polyolefinen um ein Polypropylen handelt.

7. Verwendung nach einem der Ansprüche 1 bis 6, wobei man Triglyceride der Struktur (T)
CH₂(OR¹)-CH(OR²)-CH₂(OR³) (T)
einsetzt, worin die Reste R¹, R² und R³ unabhängig voneinander Acylreste mit jeweils 8 bis 24 C-Atomen sind.

8. Verwendung nach Anspruch 7, wobei die Reste R¹, R² und R³ unabhängig voneinander Acylreste mit jeweils 16 bis 24 C-Atomen sind.

9. Verwendung nach einem der Ansprüche 1 bis 8, wobei man die Triglyceride zur Weichmachung der Polyolefine in Mengen von von 1 bis 5 phr einsetzt.

10. Verfahren zur weichmachenden Ausrüstung von Gegenständen, die ganz oder teilweise Polyolefine enthalten, wobei man eine Polymergranulat, das ganz oder teilweise Polyolefine enthält, mit Triglyceriden in Mengen von 0,1 bis 40 Gew.-% bezogen auf das Granulat, versetzt und anschließend in an sich bekannter Weise zu Fasern oder Folien verarbeitet.

## Claims

1. The use of triglycerides as softeners for polyolefins.

2. The use claimed in claim 1, **characterized in that** triglycerides of natural origin are used.

3. The use claimed in claim 1 or 2, **characterized in that** triglycerides of technical quality with a triglyceride content of at least 60% by weight are used.

4. The use claimed in any of claims 1 to 3, **characterized in that** the polyolefins are present in the form of spunbondeds.

5. The use claimed in any of claims 1 to 4, **characterized in that** the polyolefins are selected from the group of polyethylenes, polypropylenes and ethylene/propylene copolymers.

6. The use claimed in any of claims 1 to 4, **characterized in that** the polyolefins are a polypropylene.

7. The use claimed in any of claims 1 to 6, **characterized in that** triglycerides with the structure (T):
CH₂(OR¹)-CH(OR²)-CH₂(OR³) (T)
in which the substituents R¹, R² and R³ independently of one another represent acyl groups containing 8 to 24 carbon atoms, are used.

8. The use claimed in claim 7, **characterized in that** the substituents R¹, R² and R³ independently of one another represent acyl groups containing 16 to 24 carbon atoms.

9. The use claimed in any of claims 1 to 8, **characterized in that** the triglycerides are used in quantities of 1 to 5 phr for softening the polyolefins.

10. A process for the softening finishing of articles completely or partly containing polyolefins, **characterized in that** triglycerides are added to polymer granules completely or partly containing polyolefins in quantities of 0.1 to 40% by weight, based on the granules, followed by processing in known manner to fibers or films.

## Revendications

1. Utilisation de triglycérides en tant qu'agents plastifiants pour polyoléfines.

2. Utilisation selon la revendication 1, selon laquelle on utilise des triglycérides d'origine naturelle.

3. Utilisation selon la revendication 1 ou la revendication 2, selon laquelle on utilise des triglycérides de qualité technique dont la teneur en triglycérides est d'au moins 60 % en poids.

4. Utilisation selon l'une des revendications 1 à 3, selon laquelle les polyoléfines se présentent sous forme de textiles non-tissés.

5. Utilisation selon l'une des revendications 1 à 4, selon laquelle on choisit les polyoléfines dans le groupe des polyéthylènes, polypropylènes et copolymères d'éthylène et de propylène.

6. Utilisation selon l'une des revendications 1 à 4, selon laquelle les polyoléfines sont un polypropylène.

7. Utilisation selon l'une des revendications 1 à 6, selon laquelle on utilise des triglycérides de structure (T)
CH₂(OR¹)-CH(OR²)-CH₂(OR³) (T)
dans laquelle les radicaux R¹, R² et R³ sont indépendamment les uns des autres, des radicaux acyle comportant respectivement de 8 à 24 atomes de C.

8. Utilisation selon la revendication 7, selon laquelle les radicaux R¹, R² et R³, sont indépendamment les uns des autres, des radicaux acyle comportant respectivement de 16 à 24 atomes de C.

9. Utilisation selon l'une des revendications 1 à 8, selon laquelle on utilise les triglycérides pour plastifier des polyoléfines en quantités de 1 à 5 phr.

10. Procédé de plastification d'objets contenant en totalité ou en partie des polyoléfines, selon lequel on ajoute des triglycérides à un granulat polymère, contenant en totalité ou en partie des polyoléfines, en quantité de 0,1 % à 40 % en poids par rapport au granulat puis on transforme en fibres ou en films d'une manière connue.
